# EUROPÄISCHE PATENTSCHRIFT

(11) **EP 1 604 127 B1**
(45) Veröffentlichungstag und Bekanntmachung des Hinweises auf die Patenterteilung: **21.06.2006**
(21) Anmeldenummer: 04719984.9
(22) Anmeldetag: 12.03.2004
(51) Int. Cl.: F16D 65/095, F16D 55/00

(54) **SCHEIBENBREMSE MIT AUF BOLZEN GEFÜHRTEN BREMSBELÄGEN**
DISK BRAKE WITH BRAKE LININGS GUIDED ON BOLTS
FREIN A DISQUE A GARNITURES DE FREIN GUIDEES SUR DES BOULONS

(30) Priorität: 20.03.2003 DE 10312480
(43) Veröffentlichungstag der Anmeldung: 14.12.2005
(73) Patentinhaber: Lucas Automotive GmbH, 56070 Koblenz (DE)
(72) Erfinder: SCHOG, Michael, 56753 Mertloch (DE); WOLLENWEBER, Karl-Heinz, 56299 Ochtendung (DE); SCHROETER, Christian, 53489 Sinzig (DE); HEES, Dirk, 56727 Mayen (DE); ZENZEN, Guido, 56290 Macken (DE)
(74) Vertreter: von Hellfeld, Axel
(86) Internationale Anmeldenummer: PCT/EP2004/002606
(87) Internationale Veröffentlichungsnummer: WO 2004/083669

(56) Entgegenhaltungen:
- DE-A- 3 042 601
- DE-A- 3 222 956
- DE-A- 4 416 815
- DE-A- 10 113 347

## Beschreibung

Die Erfindung betrifft eine Scheibenbremse mit-einem am Fahrzeug befestigbaren, Bolzen aufweisenden Bremsträger, Bremsbelägen, und einem Sattel bzw. Rahmen.

Bremsen dieser Art sind allgemein bekannt. Üblicherweise werden die Bremsbeläge, bestehend aus Tragplatte und Reibbelag, mittels am Bremsträger befestigter Bolzen axial in Bezug auf die Bremsscheibe geführt. "Axial" bei Scheibenbremsen bedeutet im Allgemeinen: in einer Richtung parallel zur Drehachse der Bremsscheibe. "Radial" bedeutet entsprechend eine Richtung senkrecht zu einer axialen Richtung im vorstehenden Sinne.

Den Stand der Technik derartiger Scheibenbremsen repräsentieren z.B. die folgenden Patentdokumente: DE 1 238 284, DE 1 505 491, DE 1 575 920, DE 2 804 808, DE 2 845 404, DE 41 15 064 und DE 4 416 815. Weitere Patentdokumente, die auch zum Stand der Technik gehören, sind: DE 101 13 347, DE 2 211013 und U.S. 3,915,263.

Eine andauernde technische Aufgabenstellung beim Entwurf von Scheibenbremsen ist die Reduzierung des Herstellungsaufwandes und des Gewichts der Bremse bei gleichzeitiger hoher Funktionszuverlässigkeit und geringem Wartungsaufwand. Die beiden letztgenannten Zielvorgaben beinhalten insbesondere auch die Vermeidung von durch Rost bedingten Störanfälligkeiten der Bremse. Ein besonderes Problem bei allen Bremskonstruktionen ist die Vermeidung von Quietschgeräuschen durch Schwingungen.

Diesen technischen Zielsetzungen widmet sich auch die vorliegende Erfindung.

Die erfindungsgemäße Scheibenbremse weist in an sich bekannter Weise einen Bremsträger auf, der am Fahrzeugrahmen befestigbar und mit Bolzen versehen ist, zur Führung eines Bremsbelages axial in Bezug auf die Bremsscheibe. Der Bremsbelag weist Aufnahmen für die Bolzen auf, in welche die Bolzen so eingreifen, dass beim Bremsen Zugkräfte und Druchkräfte an inneren Flächen der Aufnahmen aufgefangen sind, und die Ebene, welche durch die Mittelachsen der Bolzen geht, hat einen kleineren radialen Abstand von der Scheibenachse als der Flächenschwerpunkt des Reibbelages des Bremsbelages. Die oben, angesprochenen technischen Ziele werden nach der Erfindung dadurch erreicht, dass der Bremsbelag in den Aufnahmen Linienberührung mit den jeweils zugeordneten Bolzen aufweist.

Bevorzugt ist vorgesehen, dass der genannte Abstand zwischen der Ebene und der Scheibenachse um mindestens 5 %, bevorzugt mindestens 10 % und weiter bevorzugt mindestens 15 % kleiner ist als der radiale Abstand des Flächenschwerpunktes des Reibbelages von der Scheibenachse.

Eine bevorzugte Variante der Erfindung sieht vor, dass der auf der fahrzeugäußeren Seite angeordnete Bremsbelag auf Bolzen geführt ist, deren Mittelachsen eine Ebene aufspannen, deren Abstand von der Scheibenachse kleiner ist als der Abstand des Flächenschwerpunktes des Reibbelages von der Scheibenachse.

Eine andere Variante der Erfindung sieht vor, dass die vorstehenden Verhältnisse für beide Bremsbeläge fahrzeuginnenseitig und fahrzeugaußenseitig gelten.

Gemäß einer anderen Variante der Erfindung ist vorgesehen, dass die Mittelachsen der Bolzen einen kleineren radialen Abstand von der Scheibenachse haben als der Flächenschwerpunkt des Reibbelages des Bremsbelags. Auch bei dieser Variante der Erfindung kann der genannte Unterschied der Abstände 5 % oder 10 % betragen, bezogen jeweils auf den größeren Abstand, also den Abstand des Flächenschwerpunktes F von der Scheibenachse A.

Eine bevorzugte Ausgestaltung der Erfindung sieht vor, dass die Bremsbeläge U-förmige Ausnehmungen aufweisen, in welche die Bolzen eingreifen. Dabei erstrecken sich die genannten U-förmigen Ausnehmungen bevorzugt parallel zur Symmetrieebene der Bremse, d.h. die Mittelachsen der Ausnehmungen (die auch Symmetrieachsen der Ausnehmungen als solche sind) erstrecken sich parallel zur Symmetrieebene der Bremse, also der Ebene, die im ungebremsten Zustand der Bremse durch den Flächenschwerpunkt F des Reibbelages und die Drehachse A der Bremsscheibe geht und die senkrecht auf dem Reibbelag steht.

Anstelle der genannten U-förmigen Ausnehmungen können auch Löcher in den Bremsbelägen vorgesehen sein zur Aufnahme jeweils eines zugeordneten Bolzens. Dabei sind auch Langlöcher in den Bremsbelägen möglich, wobei sich deren Längsachsen, also die Mittelachsen, die sich in Längsrichtung der Langlöcher erstrecken, senkrecht zur Symmetrieebene der Bremse erstrecken.

Die Erfindung betrifft auch Bremsbeläge zur Verwendung mit einer Scheibenbremse der genannten Art.

Weiterhin betrifft die Erfindung auch ein Verfahren zum Herstellen einer solchen Scheibenbremse.

Weitere bevorzugte Ausgestaltungen der Erfindung sind in den abhängigen Ansprüchen und in der nachfolgenden Beschreibung von Ausführungsbeispielen mitgeteilt. Es zeigt:
- Figur 1: eine Scheibenbremse in Vorderansicht, d.h. im montierten Zustand von der fahrzeugäußeren Seite her gesehen;
- Figur 2: die Scheibenbremse gemäß Figur 1 in Draufsicht, von oben auf den Sattel;
- Figur 3: die Scheibenbremse gemäß den Figuren 1 und 2 von der Seite, d.h. in Richtung der Ebene der Bremsscheibe;
- Figur 4: die Scheibenbremse gemäß den Figuren 1 bis 3 im Schnitt;
- Figur 5: den Bremsträger in Vorderansicht;
- Figur 6: den Bremsträger in Draufsicht;
- Figur 7: die Scheibenbremse gemäß den Figuren 1 bis 6 in Rückansicht, d.h. in montiertem Zustand vom Fahrzeuginneren her gesehen;
- Figur 8: einen Bremsbelag zur Verwendung bei einer Scheibenbremse gemäß den Figuren 1 bis 7;
- Figur 9: eine Ausgestaltung des Bremsträgers in Draufsicht;
- Figur 10: den Bremsträger gemäß Figur 9 in Rückansicht;
- Figur 11: ein abgewandeltes Ausführungsbeispiel eines Bremsträgers;
- Figur 12: ein abgewandeltes Ausführungsbeispiel eines Bremsbelages mit teilweise geschnittenem Bremsträger;
- Figur 13: den Bremsbelag gemäß Figur 12 in vergrößerter Darstellung;
- Figur 14: das Ausführungsbeispiel einer Bremse gemäß Figur 11 mit Sattel in Rückansicht (d.h. von der Innenseite des Fahrzeuges her gesehen);
- Figur 15: das Ausführungsbeispiel einer Bremse gemäß den Figuren 11 und 14 in Draufsicht;
- Figur 16: die Befestigung des Schwimmsattels am Bremsträger beim Ausführungsbeispiel der Bremse gemäß den Figuren 11, 14, 15;
- Figur 17: die Bolzenführung des Schwimmsattels bei einer Bremse nach dem Ausführungsbeispiel gemäß den Figuren 1 bis 10;
- Figur 18: einen Teil des Bremsträgers mit Bolzen und einer Federhülse; und
- Figur 19: einen Teil eines Bremsbelages und einen Belag-Haltebolzen mit einem Dämpfungsblech.

In den nachfolgenden Figuren sind unterschiedliche Ausführungsbeispiele dargestellt, wobei einander funktionsgleiche oder funktionsähnliche Bauteile mit denselben Bezugszeichen gekennzeichnet sind.

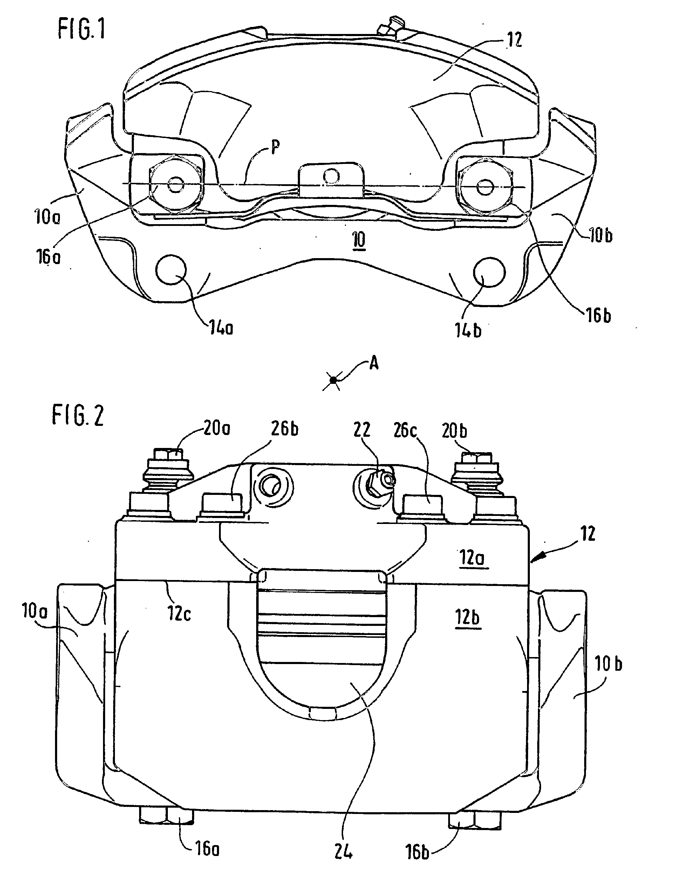

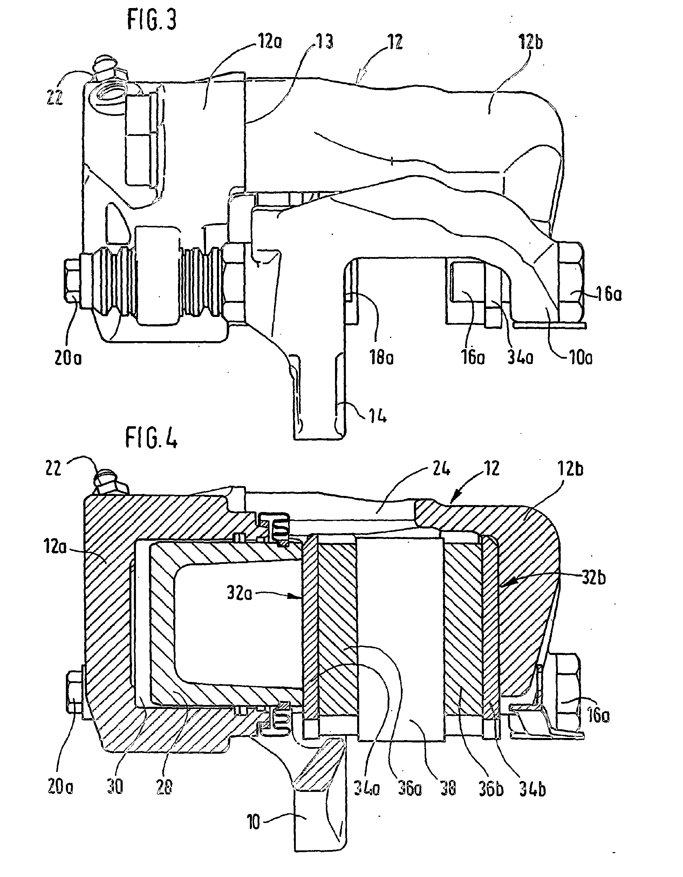

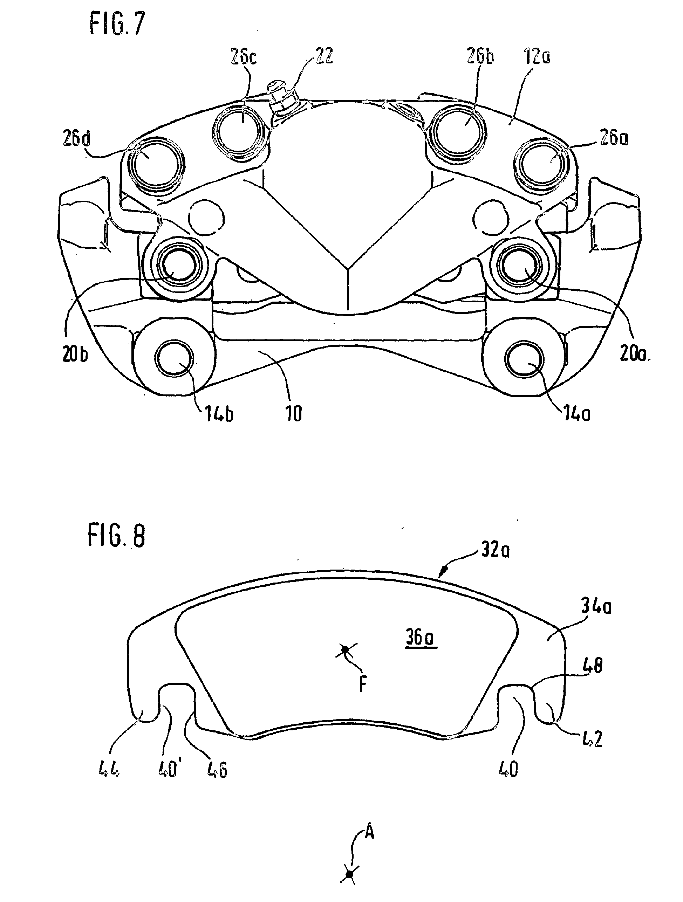

Wie insbesondere in den Figuren 1, 2, 5, 6 dargestellt ist, weist ein Bremsträger 10 zwei Arme 10a, 10b auf. Über dem Bremsträger ist ein Sattel 12 angeordnet, der bei den dargestellten Ausführungsbeispielen als Schwimmsattel und zweiteilig ausgebildet ist. Der Sattel weist einen fahrzeuginneren Abschnitt 12a und einen fahrzeugäußeren Abschnitt 12b auf. Die Abschnitte 12a, 12b sind fest miteinander verbunden durch Schrauben 26a, 26b, 26c, 26d (vgl. Figuren 2 und 7). Der Bremsträger 10 ist in üblicher Weise fest am Fahrzeug befestigt, hierzu dienen Löcher 14a, 14b und Schrauben (nicht gezeigt).

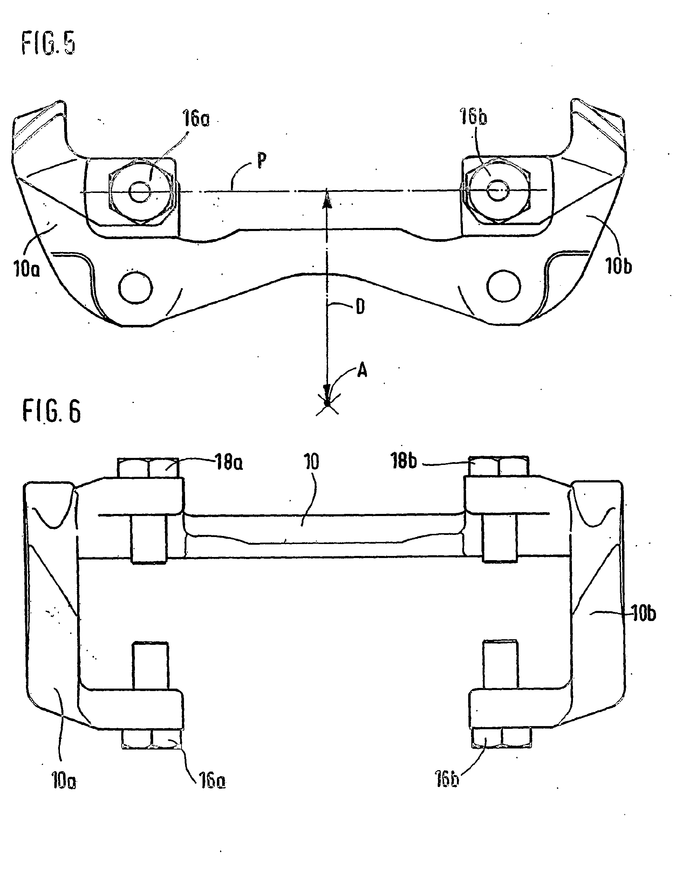

Wie insbesondere Figur 6 (und Figuren 1, 3, 4, 5) zeigen, sind Bolzenschrauben 16a, 16b, 18a, 18b mit dem Bremsträger 10 fest verbunden. Die genannten Bolzenschrauben sind über einen Teil ihrer Längserstreckung mit Außengewinde versehen, welches in ein passendes Innengewinde im Bremsträger 10 eingeschraubt ist. Die in Figur 6 freiliegenden Abschnitte der Bolzenschrauben (also diejenigen Abschnitte, die in Figur 6 nicht durch den Bremsträger abgedeckt sind) sind gewindefrei. Diese Abschnitte der Bolzenschrauben 16a, 16b, 18a, 18b dienen, wie weiter unten näher beschrieben ist, zur Abstützung der Bremsbeläge.

Wie insbesondere den Figuren 3, 4, 7 zu entnehmen ist, gleitet der Schwimmsattel 12 auf Bolzenschrauben 20a, 20b. Die Bolzenschrauben 20a, 20b sind in die fahrzeuginnenseitig gelegenen Bolzenschrauben 18a, 18b eingeschraubt, und zwar koaxial, wie insbesondere aus Figur 3 zu erkennen ist. Hierzu sind die Bolzenschrauben 18a, 18b, zentrisch mit einem Innengewinde versehen, in welches ein Außengewinde der Bolzenschrauben 20a, 20b jeweils einschraubbar ist. Somit sind die Bolzenschrauben 20a und 18a und auch die Bolzenschrauben 20b, 18b jeweils zueinander koaxial (vgl. Figur 3). Ebenso sind die Bolzenschrauben 16a, 18a koaxial und auch die Bolzenschrauben 16b, 18b (Figur 6).

Gemäß den Figuren 2 und 7 sind die beiden Sattelabschnitte 12a, 12b mittels Schrauben 26a, 26b, 26c, 26d fest miteinander verbunden. Die Anlagefläche der beiden Sattelabschnitte 12a, 12b ist in Figur 2 mit 12c bezeichnet.

Über einen Fluideinlass 22 wird in üblicher Weise Bremsfluid zum Bewegen des Kolbens 28 in eine Fluidkammer 30 eingeleitet (vgl. Figur 4). Wird also in der Kammer 30 der Fluiddruck erhöht, bewegt sich der Kolben 28 in Figur 4 nach rechts und der Sattel 12 entsprechend nach links.

Figur 8 zeigt einen (32a) der beiden baugleichen Bremsbeläge 32a, 32b (vgl. auch Figur 4). Der Bremsbelag 32a besteht aus einer Tragplatte 34a (aus Metall) und einem Reibbelag 36a. Der Reibbelag 36a verschleißt durch Reibung beim Bremsen. Figur 8 zeigt auch den Flächenschwerpunkt F des Reibbelages 32a. Der Bremsbelag weist auf der Einlaufseite und auf der Auslaufseite der Bremse jeweils eine U-förmige Ausnehmung 40, 40' auf. Figur 8 zeigt auch schematisch die Drehachse A der Bremsscheibe 38 (letztere in Figur 8 nicht gezeigt, vgl. Figur 4).

Die Bremsbeläge 32a, 32b werden mit ihren U-förmigen Ausnehmungen 40, 40' von oben auf die gewindefreien Abschnitte der Bolzenschrauben 16a, 16b bzw. 18a, 18b aufgesetzt. Dabei kommt es zu einer Linienberührung zwischen einer Wandung in den Ausnehmungen 40, 40' und der Oberfläche der jeweiligen Bolzenschraube 16a, 16b, 18a, 18b.

Die Bremsenbauteile, insbesondere die Positionen der Schraubenbolzen 16a, 16b, 18a, 18b und die Abstände zwischen den Ausnehmungen 40, 40' in den Bremsbelägen 32a, 32b und auch die Ausnehmungen 40, 40' selbst sind so bemessen, dass die Längsachsen der Bolzenschrauben 16a, 16b, 18a, 18b eine Ebene aufspannen, welche also durch diese Achsen geht, deren Abstand von der Drehachse A der Bremsscheibe (vgl. Figur 8) kleiner ist als der Abstand des Flächenschwerpunktes F des Reibbelages von dieser Drehachse A. In den Figuren 1 und 5 ist die Ebene, die durch die Mittelachsen der Bolzen aufgespannt wird mit "P" bezeichnet. Auch die Position der senkrecht zur Zeichnungsebene stehenden Drehachse A der Scheibenbremse ist schematisch dargestellt. Es versteht sich, dass der radiale Abstand dieser Scheibenachse von der genannten Ebene sich durch die Fällung des Lotes auf die Ebene ergibt, also der senkrechte Abstand gemeint ist. Dies ist die Distanz "D" gemäß der Figur.

Weiterhin sind die genannten Abmessungen der Bremsenbauteile so gewählt, dass bei Einleitung einer Bremskraft, die das Fahrzeug bis etwa 0,1 g abzubremsen vermag, nur Zugkräfte auf die Bremsbeläge wirken. Wenn in Figur 8 sich die Bremsscheibe gegen den Uhrzeigersinn um die Achse A dreht, dann ist die Einlaufseite der Bremse rechts, also entsprechend der Ausnehmung 40, während die Auslaufseite der Bremse links liegt, entsprechend der Ausnehmung 40'. Bei Bremskräften, die unter gutem Reibeingriff zwischen Radreifen und Fahrbahn die genannte maximale Fahrzeug-Verzögerung von 0,1 g nicht überschreiten, treten deshalb nur Zugkräfte am Bremsbelag 32a auf, d.h. auf der Einlaufseite (Figur 8, rechts) werden die Bremskräfte von der einlaufseitigen Nase 42 des Bremsbelages aufgenommen (die Reibkräfte wirken in Figur 8 nach links). Erst wenn eine Bremskraft oberhalb einer Verzögerung von 0,1 g eingeleitet wird, schlägt die Auflauffläche 46 des Bremsbelages gegen den zugeordneten Bolzen in der Ausnehmung 40' und die Bremskräfte werden mit Zugkräften (Nase 42) und Druckkräften (an der Fläche 46) aufgefangen.

Weiterhin sind die Abmessungen der Bremse so gewählt, dass die Bremsbeläge 32a, 32b bei Übertragung einer Bremskraft, die aus einem hydraulischen Bremsdruck von bis zu etwa 10 bar resultiert und entsprechend einer Fahrzeugverzögerung von bis zu etwa 1 m/s², stets nur die beschriebenen Zugkräfte am Bremsbelag wirken, während bei hydraulischen Bremsdrücken von mehr als 30 bar, entsprechend einer Fahrzeugverzögerung von mehr als 3 m/s², stets sowohl Zugkräfte als auch erhebliche Druckkräfte (wie oben beschrieben) auf die Bremsbeläge wirken. Im Übergangsbereich zwischen 10 und 30 bar wird eine langsam steigende Kraftübertragung durch Druck eingestellt. Hierdurch kann der Bremsträger leicht (mit geringem Gewicht) gebaut werden. Hohe Umfangskräfte werden auf beide Trägerarme günstig verteilt.

Die vorstehend genannten Kraftübertragungen durch Zug bzw. Druck werden bevorzugt für den fahrzeugäußeren Bremsbelag gewählt. Für die auf der inneren Fahrzeugseite angeordneten Bremsbeläge werden die Abmessungen bevorzugt so gewählt, dass diese überwiegend gezogen werden.

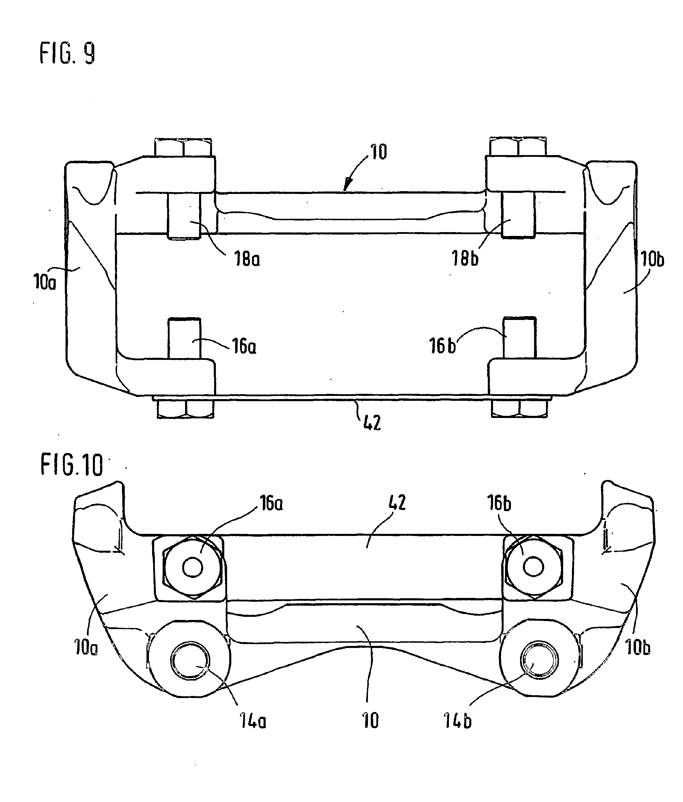

Die Figuren 9 und 10 zeigen eine besondere Ausgestaltung der Bremse, bei der der Bremsträger 10 auf der fahrzeugäußeren Seite mit einer Brücke 42 versehen ist, die die freien Arme 10a, 10b des Bremsträgers 10 miteinander verbindet. Die Brücke 42 kann z.B. aus Blech bestehen und wird mittels der Schraubenbolzen 16a, 16b verschraubt. Die Brücke 42 verstärkt den Bremsträger und kann Kräfte übertragen. Sie kann auch dazu dienen, z.B. eine Bezeichnung oder auch ein Markenzeichen anzubringen.

Die Brücke 42 kann auch als mehrschichtiges Blech ausgestaltet, insbesondere mit Dämpfungsmaterial versehen sein, bevorzugt in Sandwich-Bauweise mit der Dämpfungsschicht zwischen Metallschichten. Dabei ist bevorzugt im Bereich der Anschraubstellen (Schraubenbolzen 16a, 16b) kein Dämpfungsmaterial vorgesehen.

Die U-förmigen Ausnehmungen 40, 40' weisen entsprechend Figur 8 an ihren Böden abgerundete Übergänge zwischen den Seitenflächen auf, wobei die Übergangsradien (vgl. Bezugszeichen 48) kleiner sind als die Radien der abstützenden Bolzen 16a, 16b, 18a, 18b. Damit ist es möglich, die Berührungslinien zwischen dem Bremsbelag und dem Bolzen genauer zu definieren.

Die geringen, vorzugsweise linienförmigen Berührungsflächen der Bolzen in den U-förmigen Ausnehmungen 40, 40' ermöglichen, dass eventuelle Korrosionsprodukte aufgrund der hohen Flächenpressung entfernt werden. Schwingungen werden weitestgehend vermieden.

In den U-förmigen Ausnehmungen 40, 40' kann z.B. ein Dämpfungsblech, welches in der Form dem "U-" angepasst ist, angeordnet werden, also zwischen dem Bolzen und der Wandung der Ausnehmung. Auch können die Bolzen 16a, 16b, 18a, 18b mit einer Hülse versehen werden, insbesondere einer federnden (elastischen) Hülse, was ebenfalls eine erhöhte Dämpfung von Schwingungen bewirken kann.

Die vorstehend beschriebene Bremse hat insbesondere auch den Vorteil, dass sie besonders einfach herstellbar und montierbar ist. Bei der Herstellung reicht für die spangebende Bearbeitung des Bremsträgers nur Bohren, Anspiegeln und Gewindeschneiden.

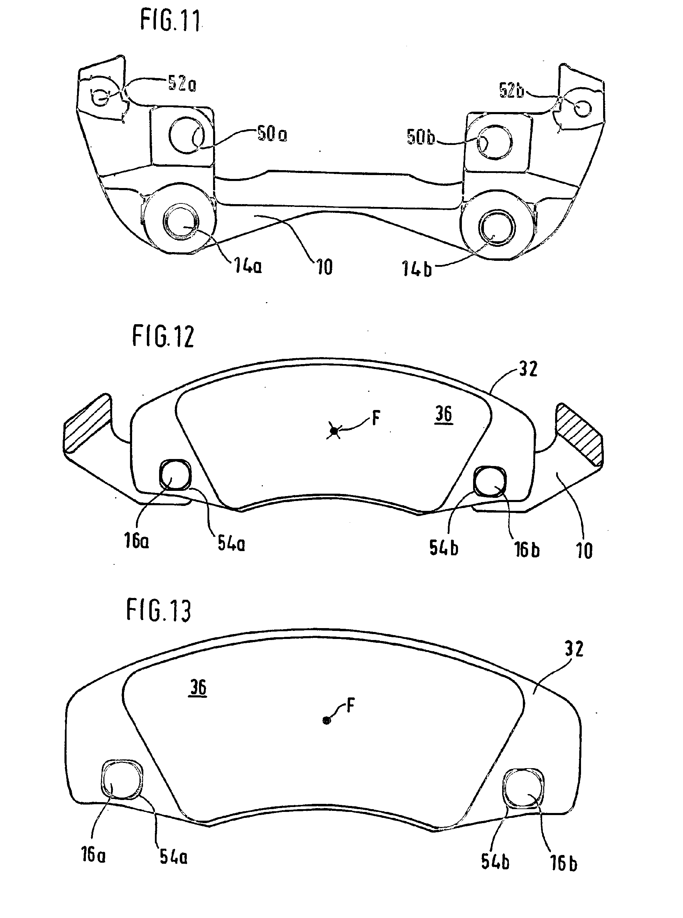

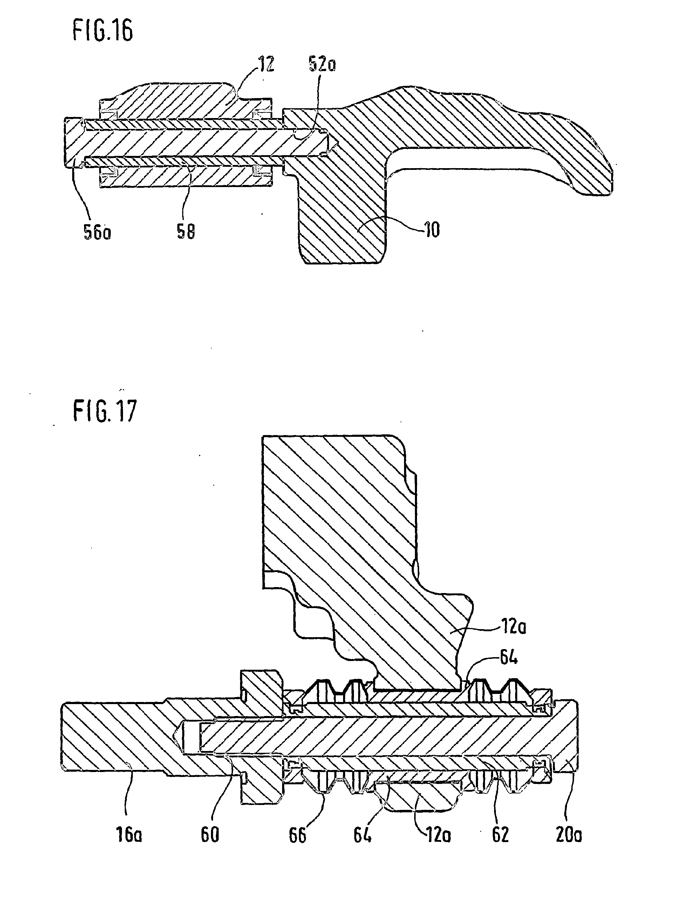

Figur 11 zeigt einen gegenüber dem Ausführungsbeispiel nach Figur 6 abgewandelten Bremsträger 10. In Übereinstimmung mit dem Ausführungsbeispiel gemäß Figur 6 sind auch beim Bremsträger 10 gemäß Figur 11 Gewindebohrungen 50a, 50b ausgeformt zur Aufnahme der Bolzenschrauben 16a, 16b, 18a, 18b (in Figur 11 nicht gezeigt). In Abwandlung des Ausführungsbeispieles gemäß Figur 6 sind aber beim Ausführungsbeispiel des Bremsträgers gemäß Figur 11 die Bolzen zur Führung des Bremssattels nicht in die einen Bremsbelag abstützenden Bolzenschrauben koaxial eingeschraubt, vielmehr sind gesonderte Gewindebohrungen 52a, 52b am Bremsträger 10 vorgesehen zur Aufnahme von Bolzenschrauben (vgl. Figur 16, Bezugszeichen 56a), auf denen der Sattel axial gleiten kann.

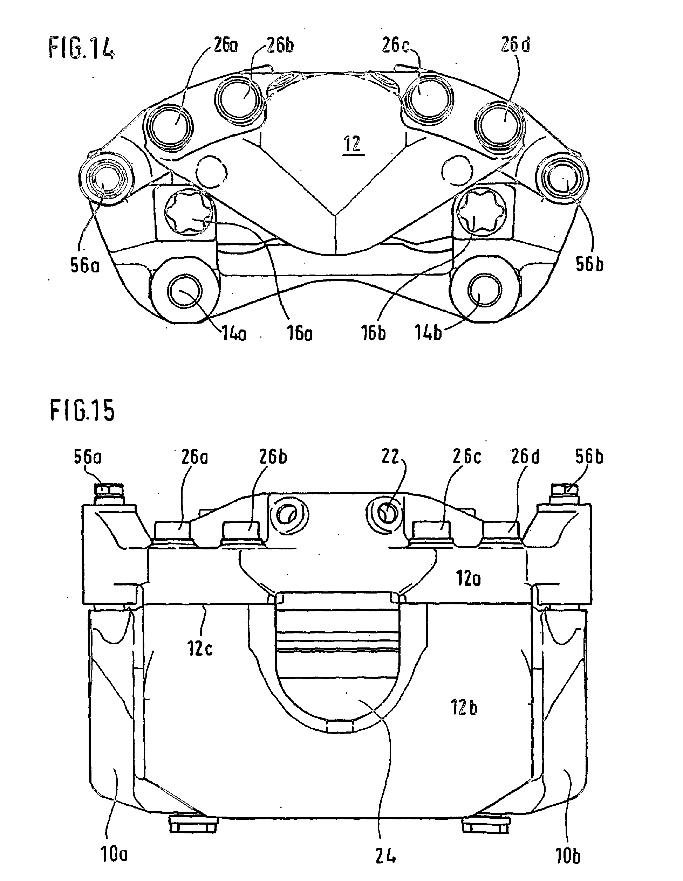

Die Bremse mit einem Bremsträger gemäß Figur 11 entspricht ansonsten, also bis auf die Führung des Bremssattels mittels der Gewindebohrungen 52a, 52b und entsprechender Bolzenschrauben 56a (vgl. Figur 16) dem Ausführungsbeispiel gemäß den Figuren 1 bis 10. Dies ist in den Figuren 14, 15 und 16 dargestellt, wo diejenigen Bauteile und Elemente, die die gleiche oder zumindest eine ähnliche Funktion haben, wie entsprechende Bauteile beim Ausführungsbeispiel gemäß den Figuren 1 bis 10, die gleichen Bezugszeichen wie in den Figuren 1 bis 10 tragen. In Abwandlung des obenbeschriebenen Ausführungsbeispieles gleitet also der Schwimmsattel 12 auf Bolzenschrauben 56a, 56b, die in die Gewindebohrungen 52a, 52b (Figur 11) eingeschraubt sind.

Figur 12 zeigt einen gegenüber dem Ausführungsbeispiel nach Figur 8 abgewandelten Bremsbelag 32 mit einem Reibbelag 36. Dieser Bremsbelag 32 ist in Figur 13 ohne den Bremsträger 10 etwas vergrößert dargestellt.

Bei den Ausführungsbeispielen gemäß den Figuren 1 bis 17 sind die Bolzenschrauben 16a, 16b, 18a, 18b, auf denen die Bremsbeläge abgestützt sind, im Abstützbereich jeweils zylinderförmig.

Die Figur 16 zeigt das oben bereits erwähnte Detail der Abstützung des Schwimmsattels 12 am Bremsträger 10 mittels einer Bolzenschraube 56a (die andere Seite der Bremse ist entsprechend ausgestaltet mit einer Bolzenschraube 56b, vgl. Figur 14), die in eine Gewindebohrung 52a im Bremsträger 10 eingeschraubt ist. Eine an sich bekannte Hülse 58 liegt zwischen der Bolzenschraube 56a und dem Sattel 12. Die Gleitführung ist in üblicher Weise abgedichtet.

Figur 17 zeigt ein Detail der Bremse gemäß den Figuren 1 bis 10, nämlich die koaxiale Anordnung der Bolzenschraube 20a, auf der der Schwimmsattel 12 gleitet, und der Bolzenschraube 16a, die den Bremsbelag abstützt. Wie oben bereits ausgeführt ist, ist in der Bolzenschraube 16a zentrisch ein Innengewinde 60 ausgeformt, in welches die Bolzenschraube 20a mit einem entsprechenden Außengewinde eingeschraubt ist.

Eine Hülse 62 umschließt die Bolzenschraube 20a. Auf der Hülse 62 gleitet eine weitere Hülse 64, die mit dem Sattel 12 fest verbunden ist. Die Gleitfläche auf der Außenseite der Hülse 62 ist mittels einer Dichtung 66 abgedichtet.

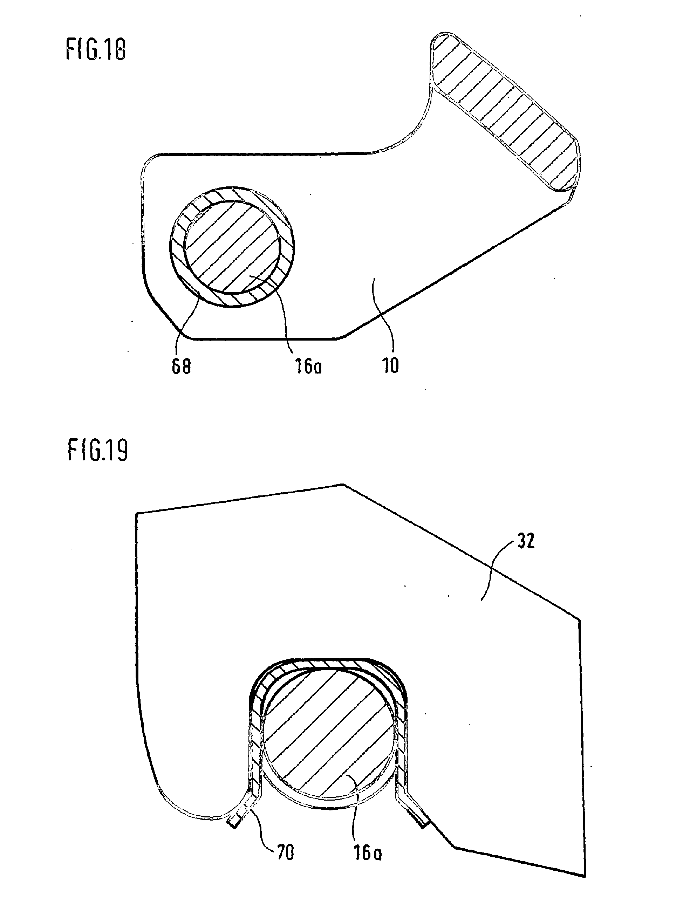

Die Figur 18 zeigt ein Detail einer bevorzugten Ausgestaltung eines Bremsträgers 10 mit einem Bolzen 16a, der hier mit einer Hülse 68 versehen ist, auf welcher der Bremsbelag abgestützt ist, entweder mittels der U-förmigen Ausnehmungen gemäß Figur 8 oder mit einem Loch 54a bzw. 54b nach den Figuren 12, 13. Die Hülse 68 kann korrosionshemmende Eigenschaften haben und/oder dämpfende Eigenschaften zwischen dem Bremsbelag und dem Bolzen aufweisen.

Figur 19 zeigt ein Detail einer bevorzugten Ausgestaltung mit einem Bremsbelag 32, der z.B. einen der Bremsbeläge 32a, 32b gemäß der obigen Ausführungsbeispiele darstellen soll und mit einem Bolzen 16a. Entsprechend könnte die Anordnung mit dem Bolzen 16b ausgestaltet werden, wobei ein Federblech 70 zwischen dem Bolzen und dem Bremsbelag zur Dämpfung angeordnet ist.

In Abwandlung der vorstehend beispielhaft beschriebenen Schwimmsattelbremsen kann die Erfindung auch mit einer Festsattelbremse verwirklicht werden. Insoweit entsprechen der Bremsträger und die Bolzen sowie die zugeordneten Merkmale der Bremsbeläge denen der Schwimmsattelbremse. Beim Festsattel erfolgt nur eine andere Krafteinleitung in die Bremsbeläge. Bei der Festsattelbremse können die Ausnehmungen entsprechend den Bezugszeichen 40, 40' in Figur 8 bevorzugt als Langlöcher ausgebildet werden. Bei diesen Ausführungsformen der Erfindung ist ein besonderer Vorteil darin zu sehen, dass aufgrund der gezogenen Bremsbeläge bei einer 4-Kolben-Bremse alle Kolbendurchmesser die gleiche Größe aufweisen können. Es ist nicht erforderlich, auf der Auslaufseite größere Kolbendurchmesser vorzusehen.

## Patentansprüche

1. Scheibenbremse, deren Bremsträger (10) mit zumindest zwei Bolzen (16a, 16b, 18a, 18b) versehen ist, zur Führung eines Bremsbelages (32a, 32b) axial in Bezug auf die Bremsscheibe (38), wobei der Bremsbelag (32a, 32b) Aufnahmen (40, 40', 54a, 54b) für die Bolzen aufweist, in welche die Bolzen (16a, 16b, 18a, 18b) so eingreifen, dass beim Bremsen Zugkräfte und Druckkräfte an inneren Flächen der Aufnahmen (40, 40', 54a, 54b) aufgefangen sind, und wobei die Mittelachsen der Bolzen (16a, 16b) eine Ebene (P) aufspannen, die einen kleineren radialen Abstand (D) von der Scheibenachse (A) hat als der Flächenschwerpunkt (F) des Reibbelages (36a, 36b) des Bremsbelages (32a, 32b), **dadurch gekennzeichnet, dass** der Bremsbelag (32a, 32b) in den Aufnahmen (40, 40', 54a, 54b) Linienberührung mit den jeweils zugeordneten Bolzen (16a, 16b, 18a, 18b) aufweist.

2. Scheibenbremse nach Anspruch 1, **dadurch gekennzeichnet, dass** die Ebene (P), welche durch die Mittelachsen der Bolzen geht, einen um mindestens 5 %, bevorzugt mindestens 10 % und weiter bevorzugt mindestens 15 % kleineren radialen Abstand von der Scheibenachse (A) hat als der Flächenschwerpunkt (F) des Reibbelages (36a, 36b) des Bremsbelages (32a, 32b).

3. Scheibenbremse nach einem der Ansprüche 1 oder 2, **dadurch gekennzeichnet, dass** der Bremsbelag (32b) auf der fahrzeugäußeren Seite auf den Bolzen (16a, 16b) angeordnet und geführt ist.

4. Scheibenbremse nach einem der vorhergehenden Ansprüche, **dadurch gekennzeichnet, dass** der Bremsträger (10) mit vier Bolzen (16a, 16b, 18a, 18b) versehen ist, auf denen zwei Bremsbeläge (32a, 32b) auf der fahrzeugäußeren bzw. der fahrzeuginneren Seite abgestützt und geführt sind, wobei die Mittelachsen der Bolzen eine Ebene (P) aufspannen, deren radialer Abstand (D) von der Scheibenachse (A) kleiner ist als die Abstände der Flächenschwerpunkte (F) der Reibbeläge (36a, 36b) der Bremsbeläge (32a, 32b) von der Scheibenachse (A).

5. Scheibenbremse nach einem der vorhergehenden Ansprüche, **dadurch gekennzeichnet, dass** die Bremsbeläge (32a, 32b) U-förmige Ausnehmungen (40, 40') aufweisen, in welche die Bolzen (16a, 16b, 18a, 18b) eingreifen.

6. Scheibenbremse nach einem der vorhergehenden Ansprüche, **dadurch gekennzeichnet, dass** die Bremsbeläge (32a, 32b) Langlöcher zur Aufnahme der jeweils zugeordneten Bolzen (16a, 16b, 18a, 18b) aufweisen.

7. Scheibenbremse nach einem der vorhergehenden Ansprüche, **dadurch gekennzeichnet, dass** die Bolzen (16a, 16b, 18a, 18b) aus einem anderen Material als der Bremsträger (10) bestehen, insbesondere aus nicht rostendem Stahl, oder dass die Bolzen mit einer Beschichtung aus nichtrostendem Material versehen sind.

8. Scheibenbremse nach einem der vorhergehenden Ansprüche, **dadurch gekennzeichnet, dass** es eine Schwimmsattelbremse, Schwimmrahmenbremse oder Festsattelbremse ist.

9. Scheibenbremse nach einem der vorhergehenden Ansprüche, **dadurch gekennzeichnet, dass** die relativen Anordnungen und Abmessungen der Bolzen (16a, 16b, 18a, 18b) und zumindest des äußeren Bremsbelages (32b) so sind, dass bei Einleitung einer Bremskraft, die das Fahrzeug bis zu einem Maximalwert im Bereich von etwa 0,1 g abzubremsen vermag, nur Zugkräfte auf den Bremsbelag (32b) wirken.

10. Bremsbelag (32a, 32b) für eine Scheibenbremse, die den Bremsbelag auf zwei Bolzen abstützt, wobei der Bremsbelag (32a, 32b) Aufnahmen (40, 40'; 54a, 54b) für die Bolzen aufweist, dass beim Bremsen Zugkräfte und Druckkräfte an inneren Flächen der Aufnahmen (40, 40', 54a, 54b) aufgefangen sind, und diese Aufnahmen so bemessen sind, dass der Abstand (D) einer Ebene, die von den Mittelachsen der Bolzen aufgespannt ist, von der Achse (A) der Bremsscheibe kleiner ist als der Abstand des Flächenschwerpunktes (F) des Reibbelages (36a, 36b) von der Achse (A) der Bremsscheibe, **dadurch gekennzeichnet, dass** der Bremsbelag (32a, 32b) in den Aufnahmen (40, 40', 54a, 54b) Unienberührung mit den jeweils zugeordneten Bolzen (16a, 16b, 18a, 18b) aufweist.

11. Bremsbelag gemäß Anspruch 10, **dadurch gekennzeichnet, dass** er U-förmige Ausnehmungen (40, 40') aufweist, die so bemessen und angeordnet sind, dass sie Führungsbolzen (16a, 16b, 18a, 18b) des Bremsträgers (10) aufnehmen.

12. Bremsbelag nach Anspruch 10, **dadurch gekennzeichnet, dass** die Aufnahmen als Langlöcher ausgeformt sind.

## Claims

1. Disc brake, the brake carrier (10) of which is provided with at least two bolts (16a, 16b, 18a, 18b), for guiding a brake lining (32a, 32b) axially in relation to the brake disc (38), wherein the brake lining (32a, 32b) has retainers (40, 40', 54a, 54b) for the bolts, in which the bolts (16a, 16b, 18a, 18b) engage in such a way that during braking tensile forces and pressure forces are absorbed on inner faces of the retainers (40, 40', 54a, 54b) and wherein the central axes of the bolts (16a, 16b) span a plane (P) which has a smaller radial distance (D) from the disc axis (A) than the centroid (F) of the friction lining (36a, 36b) of the brake lining (32a, 32b), **characterised in that** the brake lining (32a, 32b) has linear contact in the recesses (40, 40', 54a, 54b) with the bolts (16a, 16b, 18a, 18b) associated in each case.

2. Disc brake according to claim 1, **characterised in that** the plane (P) going through the central axes of the bolts, has a radial distance smaller by at least 5%, preferably at least 10% and further preferred at least 15% from the disc axis (A) than the centroid (F) of the friction lining (36a, 36b) of the brake lining (32a, 32b).

3. Disc brake according to one of claims 1 or 2, **characterised in that** the brake lining (32b) on the outside of the vehicle is arranged and guided on bolts (16a, 16b).

4. Disc brake according to one of the preceding claims, **characterised in that** the brake carrier (10) is provided with four bolts (16a, 16b, 18a, 18b), on which two brake linings (32a, 32b) are supported and guided on the outside of the vehicle or on the inside of the vehicle, wherein the central axes of the bolts span a plane (P), the radial distance (D) of which from the disc axis (A) is smaller than the distances of the centroids (F) of the friction linings (36a, 36b) of the brake linings (32a, 32b) from the disc axis (A).

5. Disc brake according to one of the preceding claims, **characterised in that** the brake linings (32a, 32b) have U-shaped recesses (40, 40') in which the bolts (16a, 16b, 18a, 18b) engage.

6. Disc brake according to one of the preceding claims, **characterised in that** the brake linings (32a, 32b) have elongated holes for retaining the bolts (16a, 16b, 18a, 18b) associated in each case.

7. Disc brake according to one of the preceding claims, **characterised in that** the bolts (16a, 16b, 18a, 18b) consist of a material different from that of the brake carrier (10), in particular of stainless steel, or the bolts are provided with a coating of stainless material.

8. Disc brake according to one of the preceding claims, **characterised in that** it is a floating calliper brake, floating frame brake or fixed calliper brake.

9. Disc brake according to one of the preceding claims, **characterised in that** the relative arrangements and dimensions of the bolts (16a, 16b, 18a, 18b) and at least the outer brake lining (32b) are such that when a braking force is initiated which the vehicle is able to brake up to a maximum value in the range of approximately 0.1 g, only tensile forces act on the brake lining (32b).

10. Brake lining (32a, 32b) for a disc brake supporting the brake lining on two bolts, wherein the brake lining (32a, 32b) has retainers (40, 40'; 54a, 54b) for the bolts, during braking tensile forces and pressure forces are absorbed on inner faces of the retainers (40, 40', 54a, 54b) and these retainers are so dimensioned that the distance (D) of a plane spanned by the central axes of the bolts from the axis (A) of the disc brake is smaller than the distance of the centroid (F) of the friction lining (36a, 36b) from the axis (A) of the brake disc,
**characterised in that** the brake lining (32a, 32b) has linear contact in the recesses (40, 40', 54a, 54b) with the bolts (16a, 16b, 18a, 18b) associated in each case.

11. Brake lining according to claim 10, **characterised in that** it has U-shaped recesses (40, 40') which are dimensioned and arranged in such a way that they retain guide bolts (16a, 16b, 18a, 18b) of the brake carrier (10).

12. Brake lining according to claim 10, **characterised in that** the retainers are shaped as elongated holes.

## Revendications

1. Frein à disque, dont le support de frein (10) est pourvu d'au moins deux boulons (16a, 16b, 18a, 18b) pour le guidage axial d'une garniture de frein (32a, 32b) par rapport au disque de frein (38), la garniture de frein (32a, 32b) présentant des logements (40, 40', 54a, 54b) pour les boulons dans lesquels les boulons (16a, 16b, 18a, 18b) s'engagent de telle sorte que lors du freinage, des forces de traction et des forces de pression s'exercent au niveau de surfaces intérieures des logements (40, 40', 54a, 54b), les axes médians des boulons (16a, 16b) délimitant un plan (P) qui possède une distance radiale (D) par rapport à l'axe du disque (A) inférieure à celle du centre de gravité de surface (F) de la garniture de friction (36a, 36b) de la garniture de frein (32a, 32b), **caractérisé en ce que** la garniture de frein (32a, 32b) présente dans les logements (40, 40', 54a, 54b) un contact linéaire avec les boulons (16a, 16b, 18a, 18b) respectivement associés.

2. Frein à disque selon la revendication 1, **caractérisé en ce que** le plan (P) qui traverse les axes médians des boulons possède une distance radiale par rapport à l'axe du disque (A) d'au moins 5 %, de préférence d'au moins 10 %, et plus préférablement d'au moins 15 % inférieure à celle du centre de gravité de surface (F) de la garniture de friction (36a, 36b) de la garniture de frein (32a, 32b).

3. Frein à disque selon l'une des revendications 1 ou 2, **caractérisé en ce que** la garniture de frein (32b) est disposée et guidée sur les boulons (16a, 16b) sur le côté extérieur du véhicule.

4. Frein à disque selon l'une des revendications précédentes, **caractérisé en ce que** le support de frein (10) est équipé de quatre boulons (16a, 16b, 18a, 18b) sur lesquels s'appuient et sont guidées deux garnitures de frein (32a, 32b) sur le côté extérieur du véhicule ou sur le côté intérieur du véhicule, les axes médians des boulons délimitant un plan (P) dont la distance radiale (D) par rapport à l'axe du disque (A) est inférieure aux distances des centres de gravité des surfaces (F) des garnitures de friction (36a, 36b) des garnitures de frein (32a, 32b) par rapport à l'axe du disque (A).

5. Frein à disque selon l'une des revendications précédentes, **caractérisé en ce que** les garnitures de frein (32a, 32b) présentent des logements en forme de U (40, 40') dans lesquels s'engagent les boulons (16a, 16b, 18a, 18b).

6. Frein à disque selon l'une des revendications précédentes, **caractérisé en ce que** les garnitures de frein (32a, 32b) présentent des trous oblongs pour le logement des boulons (16a, 16b, 18a, 18b) respectivement associés.

7. Frein à disque selon l'une des revendications précédentes, **caractérisé en ce que** les boulons (16a, 16b, 18a, 18b) se composent d'un matériau différent de celui du support de frein (10), en particulier d'acier inoxydable, ou **en ce que** les boulons sont pourvus d'un revêtement en matériau inoxydable.

8. Frein à disque selon l'une des revendications précédentes, **caractérisé en ce qu'**il est un frein à étrier flottant, un frein à cadre flottant ou un frein à étrier fixe.

9. Frein à disque selon l'une des revendications précédentes, **caractérisé en ce que** les dispositions et dimensions relatives des boulons (16a, 16b, 18a, 18b) et au moins de la garniture de frein extérieure (32b) sont telles que lors de l'application d'une force de freinage qui tend à freiner le véhicule jusqu'à une valeur maximale de l'ordre d'environ 0,1 g, seules des forces de traction s'exercent sur la garniture de frein (32b).

10. Garniture de frein (32a, 32b) pour un frein à disque, qui appuie la garniture de frein sur deux boulons, la garniture de frein (32a, 32b) présentant des logements (40, 40' ; 54a, 54b) pour les boulons, des forces de traction et des forces de pression s'exerçant au niveau des surfaces intérieures des logements (40, 40', 54a, 54b) lors du freinage, et ces logements étant dimensionnés de telle sorte que la distance (D) d'un plan délimité par les axes médians des boulons par rapport à l'axe (A) du disque de frein est inférieure à la distance du centre de gravité de surface (F) de la garniture de friction (36a, 36b) par rapport à l'axe (A) du disque de frein, **caractérisée en ce que** la garniture de frein (32a, 32b) présente dans les logements (40, 40', 54a, 54b) un contact linéaire avec les boulons (16a, 16b, 18a, 18b) respectivement associés.

11. Garniture de frein selon la revendication 10, **caractérisée en ce qu'**elle présente des évidements en forme de U (40, 40') qui sont disposés et dimensionnés de telle sorte qu'ils reçoivent des boulons de guidage (16a, 16b, 18a, 18b) du support de frein (10).

12. Garniture de frein selon la revendication 10, **caractérisée en ce que** les logements sont conçus sous forme de trous oblongs.
